# EUROPEAN PATENT SPECIFICATION

(11) **EP 2 029 856 B1**
(45) Date of publication and mention of the grant of the patent: **17.02.2010**
(21) Application number: 07733629.5
(22) Date of filing: 23.04.2007
(51) Int. Cl.: E21B 17/01, E21B 41/00, E21B 43/017

(54) **AUTONOMOUS SHUT-OFF VALVE SYSTEM**
AUTONOMES ABSPERRVENTILSYSTEM
SYSTÈME DE SOUPAPE D'ARRÊT AUTONOME

(30) Priority: 22.04.2006 GB 0608021
(43) Date of publication of application: 04.03.2009
(73) Proprietor: Mather, Sam, Whitby North Yorkshire YO21 2NG (GB)
(72) Inventor: Mather, Sam, Whitby North Yorkshire YO21 2NG (GB)
(74) Representative: Elsworth, Dominic Stephen
(86) International application number: PCT/GB2007/050207
(87) International publication number: WO 2007/122430

(56) References cited:
- US-A- 3 643 736
- US-A- 3 741 233
- US-A- 3 770 053
- US-A- 3 958 449

## Description

### Field of the Invention

This invention relates to a valve system for controlling the flow of fluids, and more particularly to a valve for controlling the flow of oil through a pipeline.

### Background of the Invention

In certain industries, for example those involving oil and gas, water or chemical manufacture, there is a requirement to control the flow of fluids through pipelines remotely. In the off-shore oil and gas industry oil/gas is extracted from beneath the sea bed by a production installation, the oil/gas potentially being transported to an oil refinery by means of a tanker vessel. Typically, a tanker may be charged via an unmanned installation at sea. Such an environment is particularly hostile. Unmanned stations are used in many remote and/or hostile environments. The performance of such stations in terms of reliability, the requirement for maintenance and the requirement for services, such as power pose considerable problems for operators. Whilst power can be generated by solar elements or wind turbines, such devices are apt to fail in hostile environments requiring manpower to be deployed at great expense and danger.

From an environmental perspective the release of potential pollutants, such as oil, gas and chemicals into the environment in the event of a break in the pipeline should be avoided. This can be achieved by a valve with a fail safe actuator which is biased to a closed position and is held open by the fluid pressure in the pipeline. When downstream pressure drops, for example if the downstream pipeline fails, the valve closes off the pipeline to prevent further egress of fluid. When transport of fluid through the pipeline is to recommence, in known systems an external control and power source is required to move the valve against the biasing force.

The requirement for an external power source can be avoided by using the process fluid, that is the fluid that is being delivered through the pipeline to power the opening and/or closing of the valve.

Systems for detecting failures in a pipeline are well known, and some systems include automatic triggering of fail safe means.

In systems transporting gas (compressible fluid) it is known to use the process fluid to operate an actuator causing shut-off of a valve when downstream failure is detected. However, such devices require venting to atmosphere of at least an amount of process fluid, which by its very nature involves pollution and can create a hazard.

DE 3418353, wich corresponds, to the closest prior art, describes a device in which a piston 3c is moved by an electric motor 3a except that in the case of a downstream pipe fracture the shut-off valve is operated by the pressure of the transported fluid.

JP 59166780 describes a sampling pipe system. A sealing valve is automatically opened and closed in accordance with the differential pressure between upstream and the downstream sides of a check valve. The valve is automatically switched on when the pump is operative generating a pressure differential across a check valve. When the pump is switched off the pressure differential across valve is removed and the valve is closed by a spring.

GB 2309241 describes a control system for the operation of a subsurface safety valve. The system is used to control flow from a well head and uses a pressurised gas to move pistons within the control system. This patent application describes apparatus which creates a barrier between a gaseous chamber and other portions of the circuit.

GB 2380781 describes a flow isolating and pressure regulating valve that combines the properties of a solenoid actuated valve with those of a gas pressure regulator. Fluid pressure is used to open and close the valve in accordance with gas demand. The arrangement is relatively simple involving a pair of opposed springs each acting on a respective side of a valve. The spring closing the valve exerts a slightly greater force than the spring opening the valve. A solenoid generates an additional force to lift the valve off a valve seat allowing gas to flow through an orifice which opens the valve. When the downstream pressures exerts a force on the valve greater than the opening force, the valve closes When the downstream pressure falls, e.g. due to demand, the downstream pressure on the valve falls so that the combined force of the opening spring and the solenoid open the valve.

The known devices either vent process fluid to atmosphere or require significant power or complex controls to open valves after closure due to pipeline failure or controlled shut down.

It would therefore be desirable to provide an improved shut-off valve system.

### Summary of the Invention

According to a first aspect of the invention, there is provided an autonomous shut-off valve system as specified in Claim 1.

According to a second aspect of the invention there is provided a method of controlling the flow of fluid through a pipe as specified in Claim 14.

The invention provides a simple means of switching on and off a shut-off valve in a pipeline with no requirement to vent fluids to atmosphere. Whereas the prior art devices that do not vent to atmosphere require significant power or complex controls for their operation, the present invention requires only a very low power battery as the only power drawn is for the operation of solenoids to control the direction of flow of process fluid through the apparatus. It is the process fluid that provides the power to open and close the shut-off valve and that fluid may be an incompressible fluid such as oil. Low power batteries are readily available and are claimed by their manufacturers to have a lifespan of at least seven years. The apparatus of the present invention requires very little maintenance or attendance, which in the environment where it would be deployed is extremely advantageous, both in terms of Financial cost and reducing the exposure of workers to potential danger.

The apparatus may include an accumulator in fluid connection with the pipeline upstream of the valve, and the valve actuator, and means to isolate the accumulator from the pipeline. The method of controlling the flow of fluid may include a step of isolating the accumulator &om the pipeline for a period upon detection in the pipeline of one of a rising pressure and a falling pressure.

### Brief Description of the Drawings

In the drawings, which illustrate a preferred embodiment of an autonomous shut-off valve system according to the invention, and are by way of example:
Figure 1 is schematic representation of an autonomous shut-off valve system;
Figure 2 is a hydraulic circuit diagram illustrating the autonomous shut-off valve system in a first state;
Figure 3 is a hydraulic circuit diagram illustrating the autonomous shut-off valve system in a second state;
Figure 4 is a hydraulic circuit diagram illustrating the autonomous shut-off valve system in a third state;
Figure 5 is a hydraulic circuit diagram illustrating the autonomous shut-off valve system in a fourth state;
Figure 6 is a hydraulic circuit diagram illustrating the autonomous shut-off valve system in a fifth state;
Figure 7 illustrates the logic and electrical control system of the autonomous shut-off valve system illustrated in Figures 1 to 6;
Figure 8 is a hydraulic circuit diagram of a second embodiment of the invention, the system being in a first state;
Figure 9 is the hydraulic circuit diagram of Figure 8 with the system in a second state;
Figure 10 is the hydraulic circuit diagram of Figure 8 with the system in a third state;
Figure 11 is the hydraulic circuit diagram of Figure 8 with the system in a fourth state;
Figure 12 is the hydraulic circuit diagram of Figure 8 with the system in a fifth state;
Figure 13 is a hydraulic circuit diagram of a third embodiment of the invention, the system being in a first state;
Figure 14 is the hydraulic circuit diagram of Figure 13 with the system in a second state;
Figure 15 is the hydraulic circuit diagram of Figure 13 with the system in a third state;
Figure 16 is the hydraulic circuit diagram of Figure 13 with the system in a fourth state;
Figure 17 is the hydraulic circuit diagram of Figure 13 with the system in a fifth state; and
Figure 18 is a hydraulic circuit diagram for a bi-directional autonomous shut-off valve according to another aspect of the invention.

### Detailed Description of the Preferred Embodiments

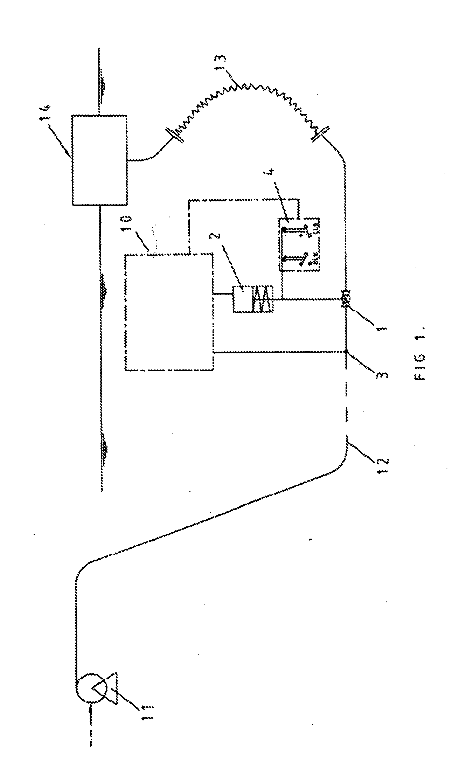

Referring now to Figure 1, there is illustrated apparatus for transferring oil from the subsurface to a surface installation. The apparatus comprises an autonomous shut-off valve system including a control system 10, a pipeline 12, for example a sub-sea or over-land pipeline, and a process pump 11 which pumps fluid through the pipeline 12, for example crude oil. Downstream the pipeline 12 connects to a flexible riser pipe 13, the downstream end of which connects to a surface installation 14. In use a tanker draws up to the surface installation, makes a fluid connection therewith, and the pump 11 is commanded to pump fluid which fills the tanker. The flexible riser pipe is one of the most likely points of failure of the pipeline.

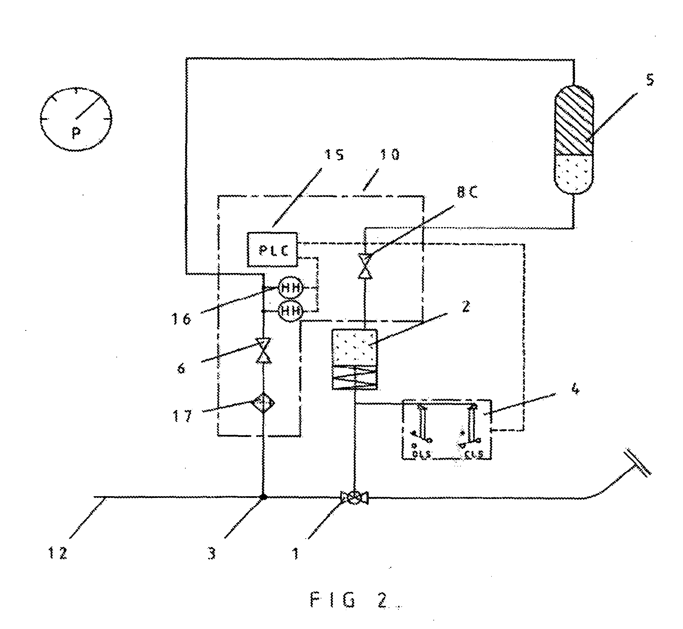

The autonomous shut off valve system is located between the pump 11 and the surface installation 14 and comprises a pipeline ball valve 1 located in the main pipeline 12 and a pressure tapping 3 into the main pipeline 12. The pump 11 will usually be located a considerable distance upstream of the ball valve 1. The system further comprises a hydraulic circuit between the pressure tapping 3 and the ball valve actuator 2, the function of the circuit being to open and close the said ball valve 1. The hydraulic circuit includes a control system 10, valve position indicators 4 and a valve actuator 2. The shut-off valve actuator 2 includes a biasing means arranged to bias the shut-off valve into one of a closed condition and an open condition The hydraulic circuit and its manner of operation are described in greater detail with reference to Figures 2 to 8. Whilst in the present example the autonomous shut-off valve system comprises a ball valve, the ball valve may be replaced by any suitable actuable valve such as a gate, globe, axial flow (pressure balanced), plug or butterfly valve.

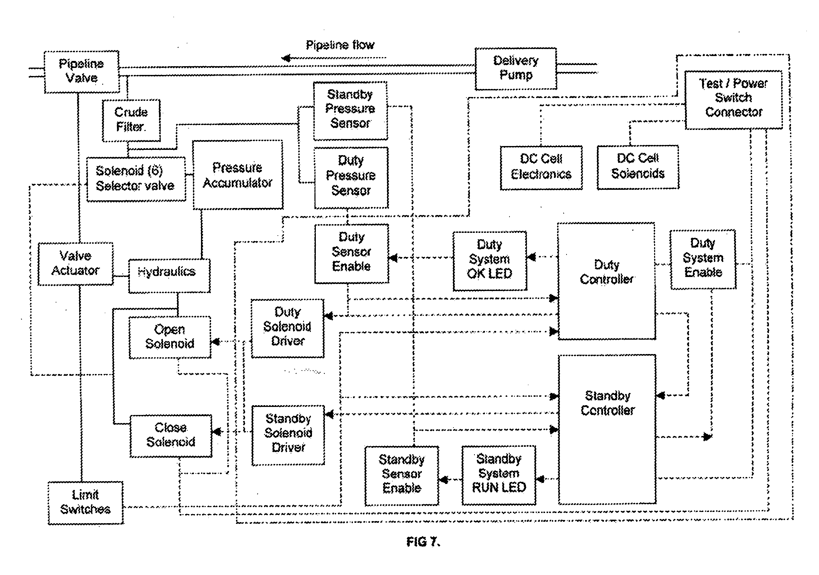

Figure 2 illustrates the control system 10 in greater detail. The control system 10 includes solenoid operated valves 6 and 8c, a filter 17, two pressure transmitters 16 and a battery powered controller 15 (described in greater detail with reference to Figure 7). In Figure 2 the valve 1 is open and the pipeline is fully pressurized by the process fluid in the pipeline 12. The control valves 6 and 8c are open and the spring of the valve actuator 2 is compressed by the gas pressure in the accumulator 5. In Figure 2 the apparatus is in an automatic operation mode. The provision of two pressure transmitters 16 provides for continued operation of the apparatus in the event of one of the pressure transmitters 16 failing.

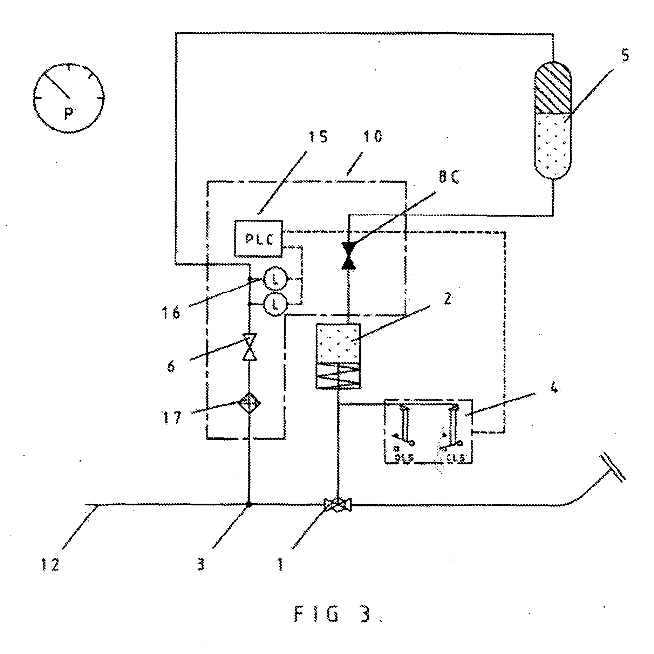

Figure 3 illustrates the status of the apparatus when the pressure in the pipeline 12 is falling. Valve 1 is fully open. The pressure in pipeline 12 falls to a first pressure threshold, which is detected by the pressure transmitters 16. A signal (indicated by the broken line) is transmitted from the pressure transmitters 16 to controller 15, which upon receiving the said input signal transmits an output signal to the solenoid operated control valve 8c, closing said valve. With the pipeline pressure at a "falling low" threshold, the gas pressure in the valve actuator 2 is sufficient to hold the said valve open. By closing the valve 8c, the valve actuator 2, and therefore the valve 1 are isolated in an open condition. By isolating these components of the apparatus in the afore-mentioned manner, the valve 1 does not partially close and therefore hunting is avoided.

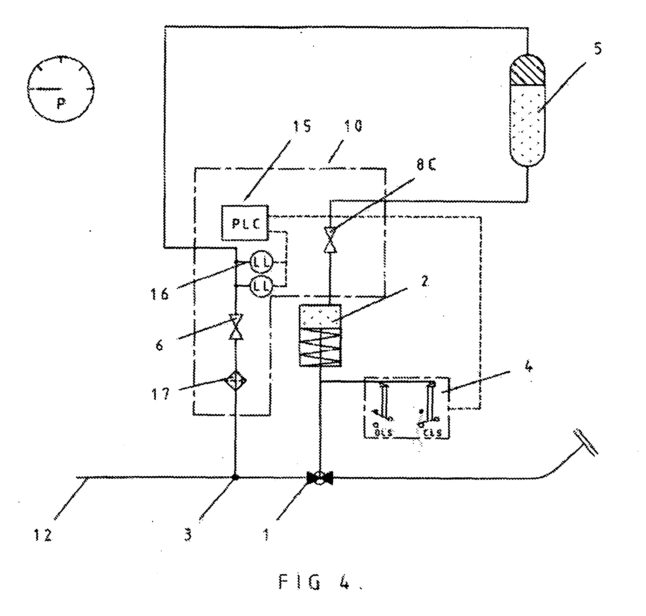

Figure 4 illustrates the status of the apparatus when the pressure in the pipeline 12 falls below the first "falling low" threshold to the second "low low" threshold at which point there is a requirement to close the valve 1. The pressure transmitters 16 transmit a signal to the controller 15 which causes the valve 8c to open. The force generated by the spring of the valve actuator 2 is greater than the force generated by the accumulator 5, resulting in the spring of the valve actuator 2 forcing the actuator fluid back through the valve 8c and into the accumulator 5 and the process fluid back to the pipeline 12 via the pressure tapping 3 (the valve 6 remains open).

The apparatus remains in the status illustrated in Figure 4, i.e. the pipeline 12 is shut down until an operator re-starts pumping at the distant pumping station 11 of the process fluid through the pipeline. When pumping of the process fluid through the pipeline 12 is recommenced flow of fluid to the surface installation 14 is prevented due to the valve 1 being closed. The pressure in the pipeline 12, and hence at pressure tapping point 3 builds, the pressure being sensed by the pressure transmitters 16.

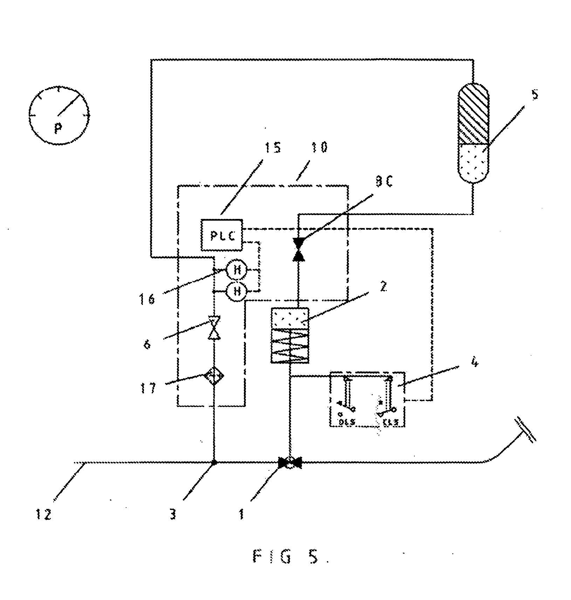

Figure 5 illustrates the status of the apparatus when the pressure in the pipeline 12 is rising. When the fluid pressure in the pipeline 12 has reached a first threshold pressure known as a "rising high" threshold, the controller 15 commands the valve 8c to close, isolating valve actuator 2 from the accumulator 5, with the valve 1 remaining in its closed position so that the pressure in the pipeline 12 continues to build.

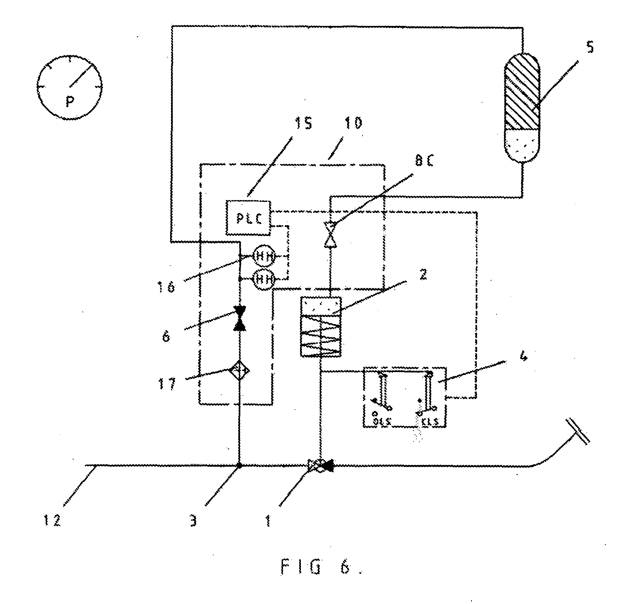

Referring now to Figure 6, as the pressure rises a second pressure threshold (referred to herein as "rising high high") is reached. The fluid line from the pressure tapping 3 to the accumulator 5 has been open resulting in the accumulator 5 filling with process fluid and pressurising the gas in the accumulator. When the accumulator is substantially full of process fluid the gas pressure is sufficient to generate a force greater than that generated by the spring of valve actuator 2 and open the valve 1 fully. The "rising high high" threshold is reached and is sensed by the pressure transmitters 16. The transmitters 16 send an input signal representative of the "rising high high" threshold to the controller 15, which generates an output signal commanding closure of the valve 6. At the same time as commanding closure of valve 6, the controller commands the valve 8c to open and a timer forming part of the controller 15 to start. By opening the valve 8c the pressurised gas in accumulator 5 can communicate with the valve actuator 2 and cause the valve 1 to open. The purpose of the timer is to secure the autonomous shut-off apparatus in a steady state for a period that allows the pressure in the pipeline 12 to build up and stabilize at a level that is above the "falling low" threshold. When the period set by the timer has elapsed, the controller 15 commands the valve 6 to open and the system is back in the state illustrated in Figure 2.

Instead of using a timer, the valve 6 may also be controlled by at least one pressure sensor located upstream of the valve 6. When the pressure upstream of the valve 6 stabilizes at a pre-set value greater than or equal to the "falling low" threshold the valve 6 is re-opened.

Figure 7 is a schematic diagram illustrating how the controller functions in relation to the pipeline and the other apparatus of the system. The controller includes a duty controller system and a standby controller system so that the apparatus can continue to function if the duty controller system fails. The function of each of the controller systems is to direct operation of the solenoids of the solenoid operated valves 8. The control apparatus includes a first power source comprising a three volt cell, which powers the electronics of the controller, and a second power source comprising five three volt cells, which power the solenoids of the solenoid operated valves 8. The cells are typically ultralife high-energy non-rechargeable lithium manganese dioxide or rechargeable lithium ION batteries.

The two controller systems are identical low power eight bit microcontrollers. The duty controller system is initiated by power being supplied thereto from an external switch. The software operating the duty controller system first enables a pressure sensor excitation and the pressure in the pipeline is read. During this operation an LED flashes. This LED and a similar LED associated with the standby controller system are both visible from outside the controller housing allowing an operator to check the status of the controllers. The logic built into the software begins a valve opening sequence if the pressure in the pipeline is above a certain threshold, for example twelve bar, the opening sequence beginning with a five second pulse to the solenoid of the solenoid operated valve 8a, which opens the valve in the pipeline. Once the solenoid operated valve 8a is open the hydraulics are latched open and the valve actuator is filled with fluid and opened. The duty controller system monitors the pipeline pressure periodically for sustained pressure below a certain threshold, for example five bar, which indicates the end of demand on the system (which may be as a result of pumping of fluid through the pipeline having ceased, or a leak in the pipeline). When such a low pressure is detected the duty controller commands the solenoid operated valve 8b to close, and operation of the solenoids is prohibited for a period following closure. After the period the duty controller system is reset so that another opening sequence can begin. During the above-described process the eight bit micro-controller of the duty controller goes into a sleep mode for prescribed periods. For example, the micro-controller may fall into a low current sleep mode for periods of for example 2.3 seconds and at the end of each 2.3 second period change into a higher current state for a period of, for example 20mS, to run the program. During the 2.3 second period signals are sent to the standby controller system to check that it is functional. Whilst the duty controller system is operating the solenoid valves 8 the micro-controller would not fall into a low current sleep mode.

If the signals from the duty controller system to the standby controller system fail then the standby controller system is activated and the duty controller system is disabled. The standby controller system works in the same manner as the duty controller system, except that the pipeline pressure signal that it receives is from a different pressure sensor and a different LED flashes (i.e. the Standby System Run LED) indicating that the controller has gone into standby mode.

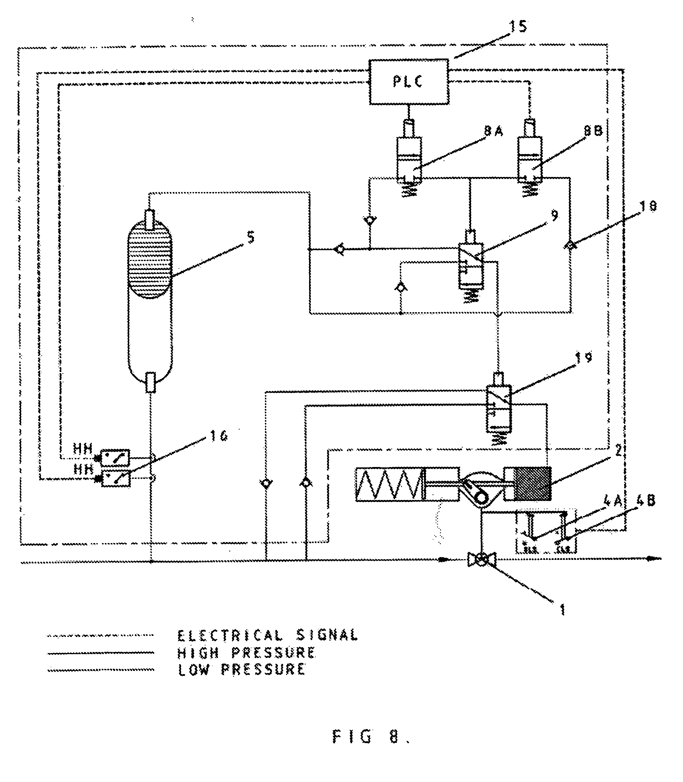

Referring now to Figures 7 and Figures 8 to 12, a typical operating sequence of the electrical controls illustrated in Figure 7 is described below, using the example of the embodiment shown in figures 8-12. (The effects of this sequence on the non-electrical parts of the system are fully described in the figures 8-12).

### I) Pipeline flowing (fig 8)

The duty system is enabled and its LED is lit.

The pipeline valve is open and the limit switches 4 output the "valve open" signal to the duty controller 15.

Duty pressure sensor 16 measures a sufficiently high pressure and outputs this value to the controller - this produces no alarms in the controller.

Solenoid drivers are inactive

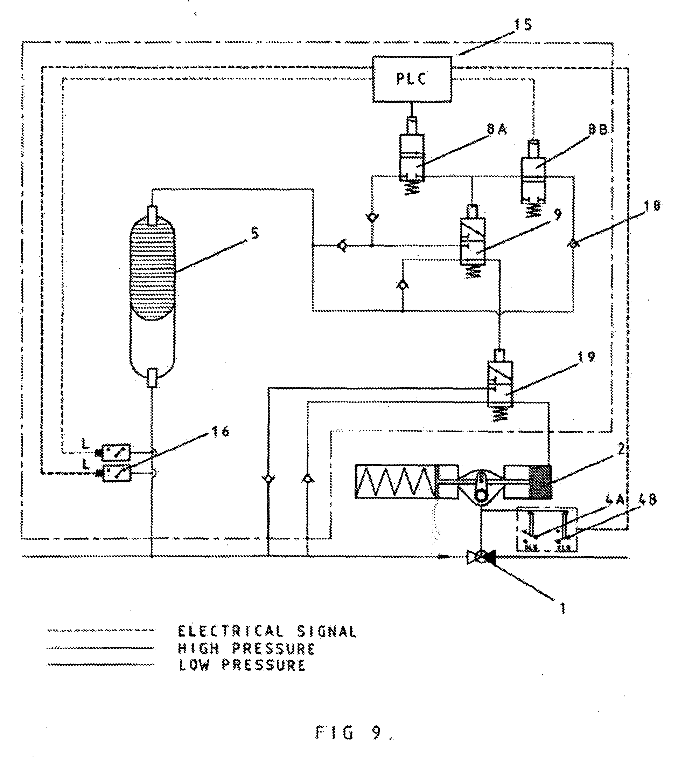

### II) Falling pressure (fig 9)

Pressure falls to the Low threshold - the pressure sensor output value triggers a Low alarm in the controller. The controller in turn activates the duty solenoid driver, resulting in a 5 seconds pulse to the solenoid of valve 8b, thereby opening the valve 8b.

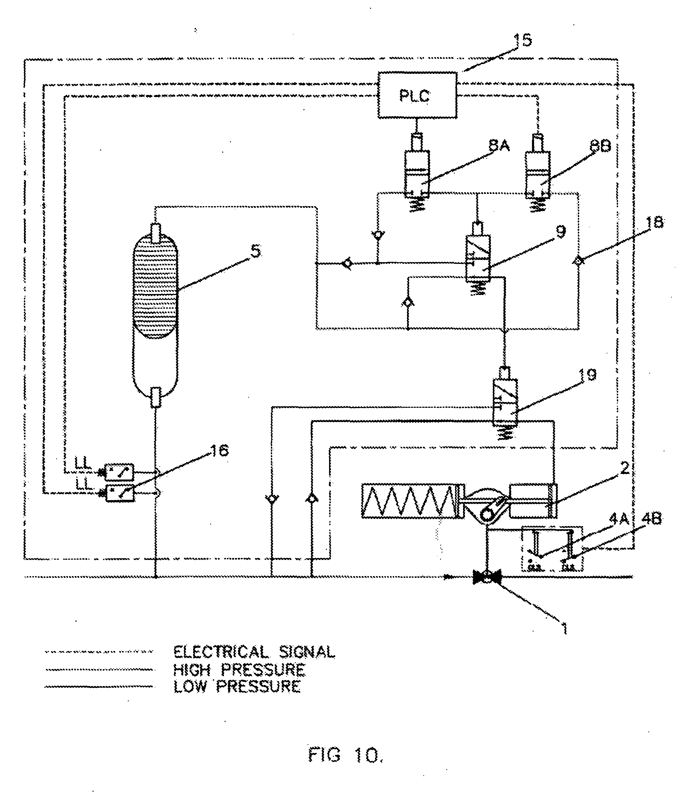

### III) Pipeline valve closing (fig 10)

After the 5 seconds, the solenoid driver ends the pulse thus de-energizing the solenoid and causing valve 8b to return to its spring state.

The system is now set to new a configuration that allows the valve 1 to close.

Valve 1 ends in the full closed position and the limit switches 4 output the "valve closed" signal to the controller 15.

The pipeline is shutdown.

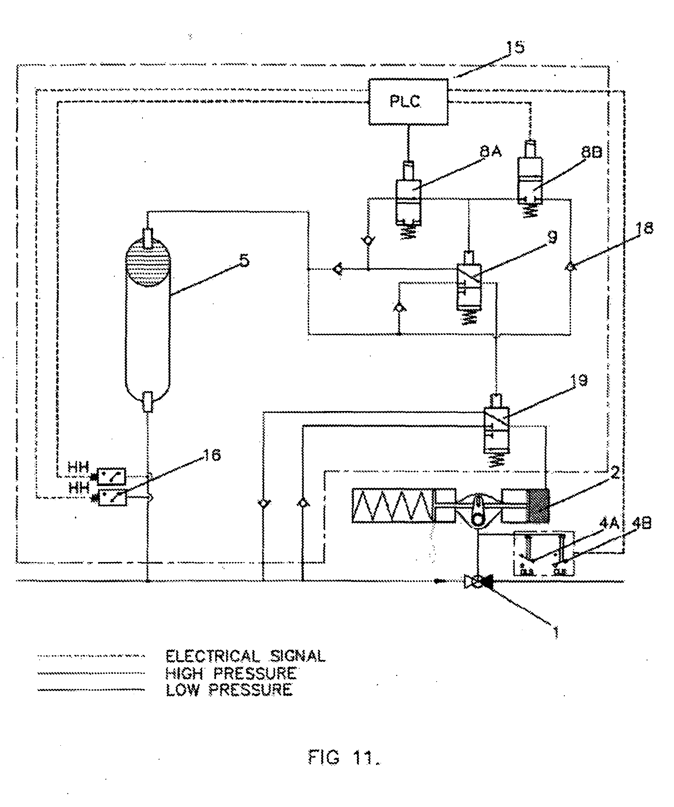

### IV) Shutdown to restart (fig 11)

Now a new sequence begins, in order to restart the pipeline.

Duty pressure sensor 16 measures a High High pressure and outputs this value to the controller - this produces a High High alarm in the controller.

The alarm triggers the controller to activate the duty solenoid driver, resulting in a 5 seconds pulse to the solenoid of valve 8a, thereby opening the valve 8a.

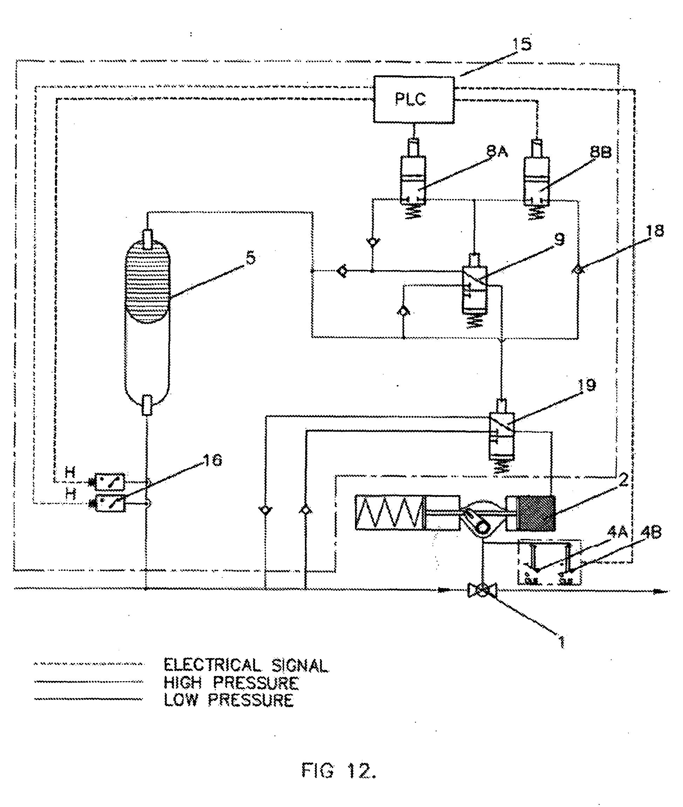

### V) Pipeline valve opening (fig 12)

After the 5 seconds, the solenoid driver ends the pulse to 8a thus de-energizing the solenoid and causing valve 8a to return to its spring state.

The controller inhibits further operation of solenoid valves for a pre-set period (or, alternatively, until the valve reaches its open position).

The system is now set to new a configuration that allows the valve 1 to open.

Valve 1 ends in the full open position and the limit switches 4 output the "valve open" signal to the controller 15.

### VI) Pipeline flowing in automatic operation (fig 8)

The controller resets itself back into automatic operation mode at the end of the defined time interval, i.e. controller is able to react to the pressures that are sensed.

The system is now running in automatic mode, awaiting another cycle to be started in case of falling pressure.

Figures 8 to 12 illustrate an alternative embodiment of the invention that is particularly suitable for operating large pipeline valves (like numerals are used to indicate like parts). The Figures 8-12 progress through a sequence of operation of the apparatus of this embodiment.

In this embodiment the actuator 2 is powered directly by the process fluid and the switching of solenoid operated valves 8a, 8b by the control fluid held in accumulator 5, the control fluid in the example being a gas. In Figure 8, the spring of the valve actuator 2 is compressed by the process fluid from pipeline, which is pressurised, and the valve 1 is open. The accumulator 5 is filled with process fluid. Solenoid operated valves 8a and 8b are de-energized (i.e. they are controlled by their springs). The apparatus includes pilot operated selector valves 9 and 19, which are energized to hold the pilot operated valve 19 in the "inlet" position, such that process fluid is able to pressurise the actuator cylinder 2, but is unable to return. Process fluid flows through the pilot operated valve 19 to the valve actuator, and is piloted by pressurised fluid from the accumulator 5. Pilot operated valve 9 is operated by and allows passage of the pressurised control fluid held in the accumulator 5.

Figure 9 illustrates the condition where the pressure in the pipeline is falling and reaches a "falling low" threshold. The pressure transmitters 16 sense the "falling low" pressure and provides an input signal to the controller 15, which triggers energisation of the solenoid operated valve 8b. The solenoid operated valve 8b remains actuated for five seconds to allow pressurised control fluid to return to the accumulator 5 from the pilot of pilot operated valve 9, which returns to its spring state. Venting of the pilot pressure of pilot operated valve 9 permits the pilot operated valve 19 to vent its pilot pressure back to the accumulator 5 and hence return to its spring state, in which the process fluid is able to return to the pipeline from the actuator cylinder, allowing valve 1 to begin to close.

Note that the actuation of valve 8b can alternatively be set to occur at a falling "Low Low" pressure (see definition below), in which case the valve 1 is held in the full open position until pressure in the pipeline is so low that the actuator is already able to fully close the valve. Time to complete the stroke from starting to close to fully closed is therefore minimized, as there is insufficient back pressure remaining to resist the actuator spring force, throughout the whole actuator stroke.

Figure 10 illustrates the condition of the apparatus after the five second period for which solenoid operated valve 8b is energised. The solenoid operated valve 8b is de-energised and returns to its spring state. When the pipeline pressure is at the "falling low low" threshold, the spring of actuator 2 exerts a force sufficient to complete closure of the valve 1. The pipeline is now shutdown.

Figure 11 illustrates the apparatus ready for re-start. The valve 1 is closed. Re-start is commenced by pumping fluid through the pipeline against the closed valve 1. As fluid is pumped into the pipeline the pressure therein rises until a "rising high high" threshold is reached, which is sensed by the pressure transmitters 16. The pressure transmitter sends an input signal to the controller 15, which sends an output signal to solenoid operated valve 8a, energising the said valve for a five second period. Opening the solenoid operated valve 8a puts a pilot pressure on the pilot operated valve 9. Within five seconds the pilot operated valve 9 is open, which allows the control fluid from accumulator 5 to actuate the pilot operated valve 19, moving it to its "inlet" position, so that process fluid can flow from the pipeline through the valve 19 to the actuator 2, which begins to open valve 1.

Figure 12 illustrates the re-started apparatus after the five second period has elapsed. The solenoid operated valve 8a is de-energised and returns to its spring state, i.e. closed. Some control fluid is trapped in the pilot of pilot operated valve 9, which keeps the pilot operated valve 19 activated, i.e. process fluid may pass from the pipeline to the valve actuator 2. If the pipeline downstream of the valve 1 requires re-pressurisation, the pipeline pressure may fall when the valve 1 is opened. This could lead to the apparatus hunting. However, with the pilot operated valve 19 in the inlet position the process fluid cannot return to the pipeline by virtue of the non-return valve in the actuator inlet line, so the valve 1 is unable to move towards its closed position, regardless of how far the pipeline pressure falls. When the pipeline pressure stabilizes at or above the "rising high" threshold, the fluid pressure in the actuator generates sufficient force to overcome the force generated by the spring of the valve actuator 2 and the valve 1 is opened fully. The system is returned to its automatic operation mode awaiting a future fall in pipeline pressure.

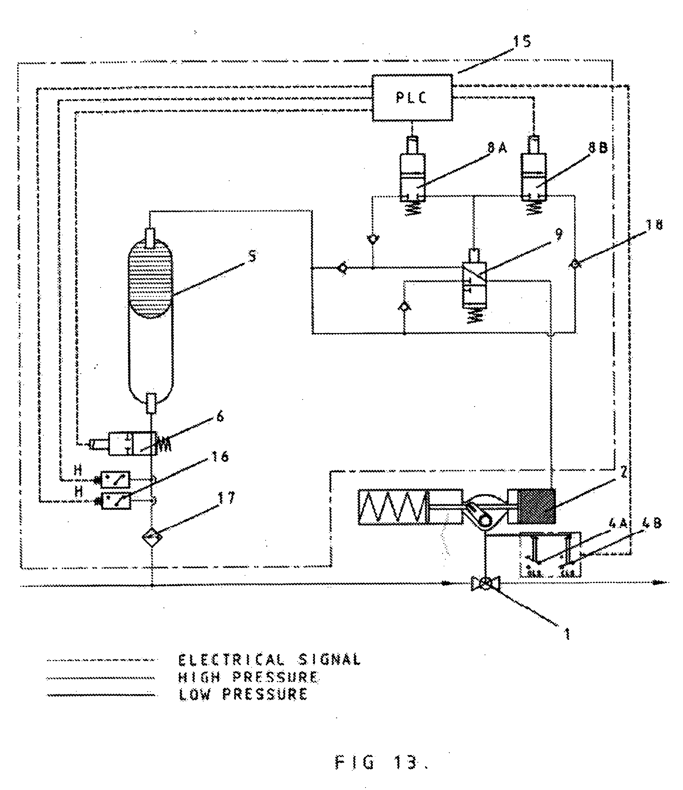

A further alternative embodiment of the invention is illustrated in Figures 13 to 17 which is suited to smaller (or pressure balanced) pipeline valves 1, valves that must be opened and closed rapidly and/or repeatably and which must be held open whilst the flow and pressure of the process fluid stabilises. The embodiment of Figures 13 to 17 is also useful where the process fluid is not suited to the embodiments illustrated in Figures 2 to 6.

The apparatus illustrated in Figures 13 to 17 includes a barrier between the process fluid and the valve actuator, that is the process fluid powers the system through a barrier accumulator 5. Otherwise the apparatus is similar to the apparatus illustrated in Figures 8 to 12, with the addition of a valve 6 on the upstream side of the accumulator 5.

Figure 13 illustrates the apparatus in automatic mode when the pipeline is pressurised by the process fluid, the spring of the valve actuator 2 is compressed by the pressure of the process fluid in the cylinder of valve actuator 2. The accumulator 5 is filled at the pressure of the process fluid. Solenoid operated valves 8a and 8b are de-energised (in their spring state in which fluid cannot pass through). Pilot operated valve 9 is energised, in the "inlet" position, whereby barrier power fluid is able to pressurise the actuator cylinder (but is unable to return, thus holding the valve 1 open regardless of fluctuations in the accumulator pressure).

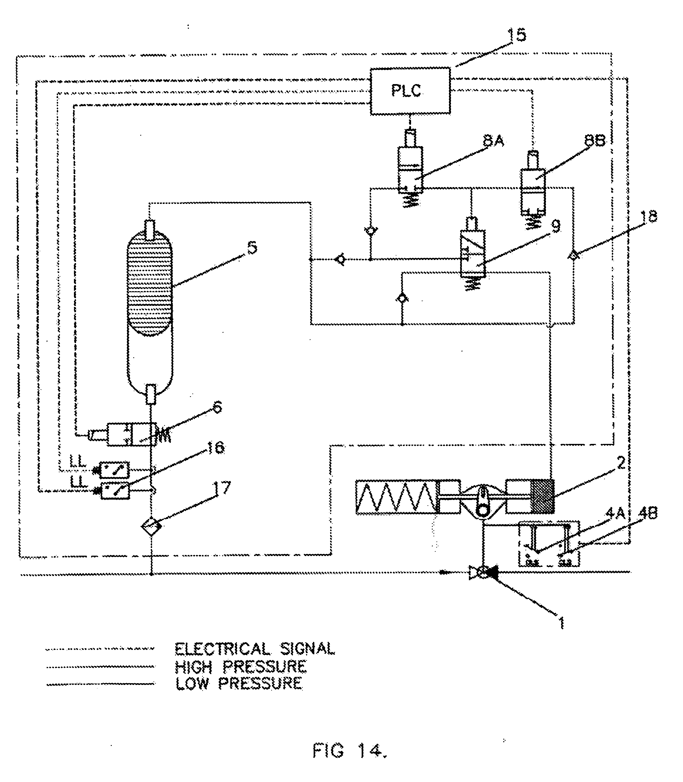

Figure 14 illustrates the apparatus when the valve 1 is open but the pressure is falling and has reached a "falling low low" threshold. The pressure transmitters 16 sense the falling pressure and send an input signal to the controller 15, which in turn sends an output signal to the solenoid operated valve 8b to open the said valve for a period of five seconds. During this period the pressurised barrier fluid which had been energising pilot operated valve 9 is returned via the open valve 8b, the valve 9 returning to its spring state, which permits the fluid from valve actuator 2 to return to the accumulator 5.

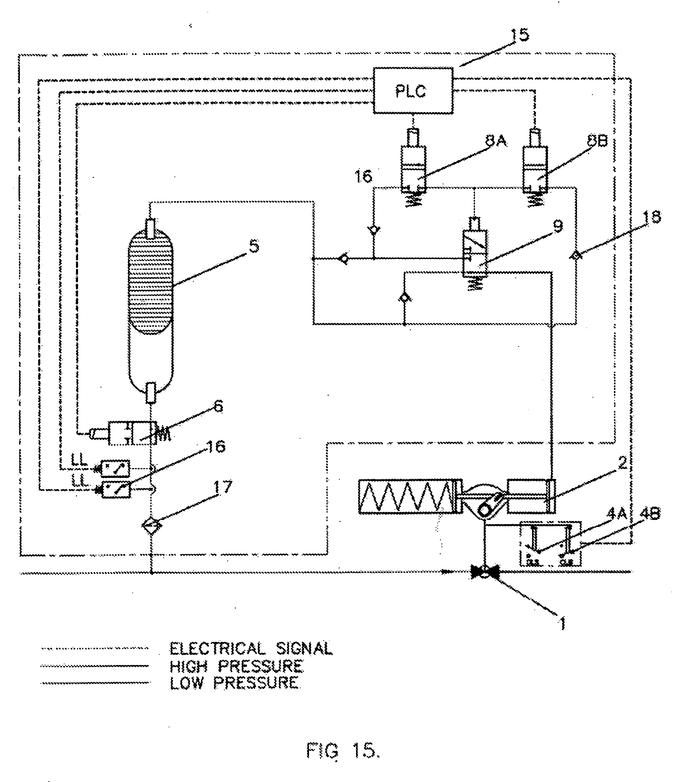

Figure 15 illustrates the apparatus after the five second period has elapsed. The solenoid operated valve 8b is de-energised and returns to its spring state, i.e. the solenoid operated valve 8b is closed. The pipeline pressure is at or below the "falling low low" set point which is low enough to complete actuation of the valve 1 to the fully closed position.

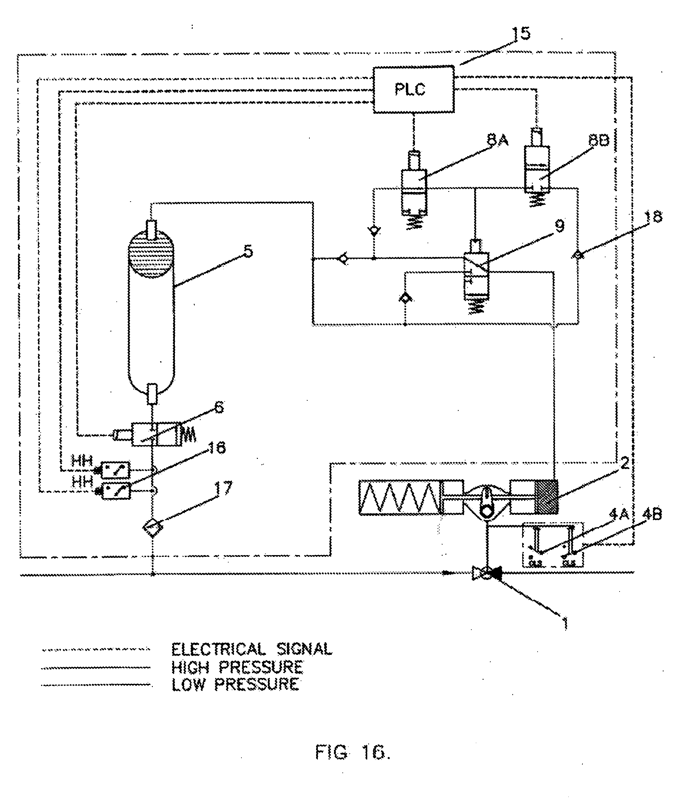

Figure 16 illustrates the apparatus with the valve 1 in the fully closed position. The pipeline is shut down and remains so until an operator decides to re-start pumping process fluid through the pipeline. When pumping is re-started pressure builds up in the pipeline against the closed valve 1. The pressure transmitters 16 generate a signal representative of rising pressure in the pipeline. This signal is an input to the controller 15. When a "rising high high" threshold is detected the controller 15 energises (closes) the valve 6 and immediately energises (opens) the solenoid operated valve 8a for a five second period. During this five second period, the barrier fluid from the accumulator passes through the valve 8a and exerts a pilot pressure on the pilot operated valve 9. The accumulator 5 is isolated from the pipeline and so the pilot operated valve 9 is pressurised moving it to its "inlet" position regardless of any changes in pipeline pressure, allowing barrier fluid to flow from the accumulator 5 to the valve actuator 2, which commences opening of the valve 1.

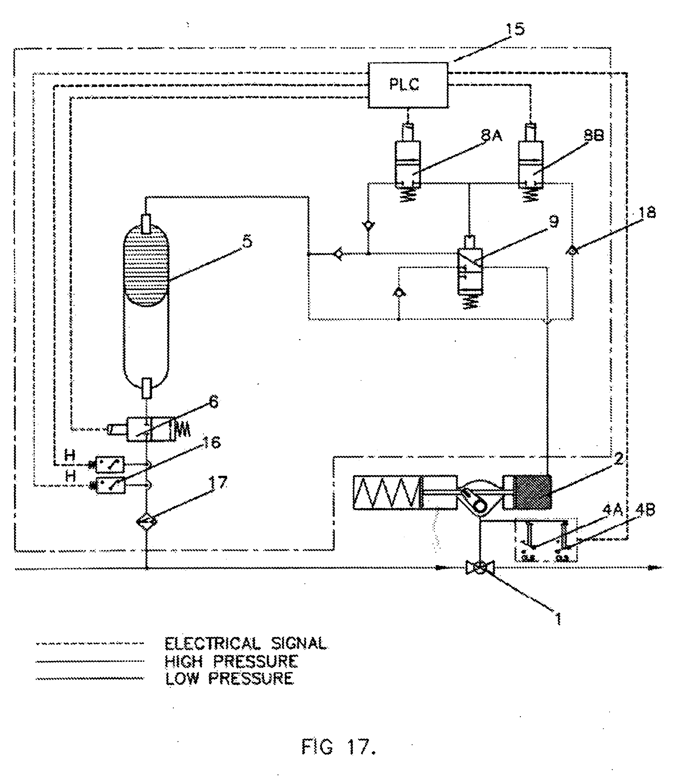

Figure 17 illustrates the apparatus after the five second period mentioned in connection with Figure 16 has elapsed. The solenoid operated valve 8a is de-energised and returns to its spring state. The pilot operated valve 9 is held in its inlet position by the trapped barrier fluid on its pilot, i.e. barrier fluid flows from the accumulator 5 to the valve actuator 2. The valve 6 remains energised and accumulator 5 remains isolated from the pipeline. When valve 1 is opened the pipeline pressure may fall, for example if the downstream pipeline requires re-pressurisation. However, as the accumulator is isolated from the pipeline the actuator 2 continues to fill and the valve 1 continues its opening stroke until it is fully open.

Once the pipeline pressure has stabilised at or above the "rising high high" threshold at which pressure the force exerted on the valve actuator 2 by the barrier fluid is greater than its spring force and the valve 1 is fully open. The valve 6 is then de-energised and the accumulator 5 is pressurised by the process fluid in the pipeline. When the accumulator is charged the apparatus is back in automatic operation mode (see Figure 13). As an alternative to the pressure transmitters 16 detecting a stable "rising high high" threshold and the controller switching the valve 6, a timer may be used, the assumption being that within a pre-set period of time the pressure of the process fluid within the pipeline will have stabilised.

The total power consumed by the system during the "closed" duration of the valve 6 may be reduced by replacing the valve 6 with a sub-system of the same form as the circuit comprising valves 8a, 8b, 9 and 19 (see figures 8 to 12). This allows the functionality of valve 6 to be achieved via valve 19 (in the previous location of valve 6) taking advantage of the latching system and pilot operated valves to achieve sustained isolation (closure) in the valve 6 position, without needing to supply electrical power over the full duration of the closure.

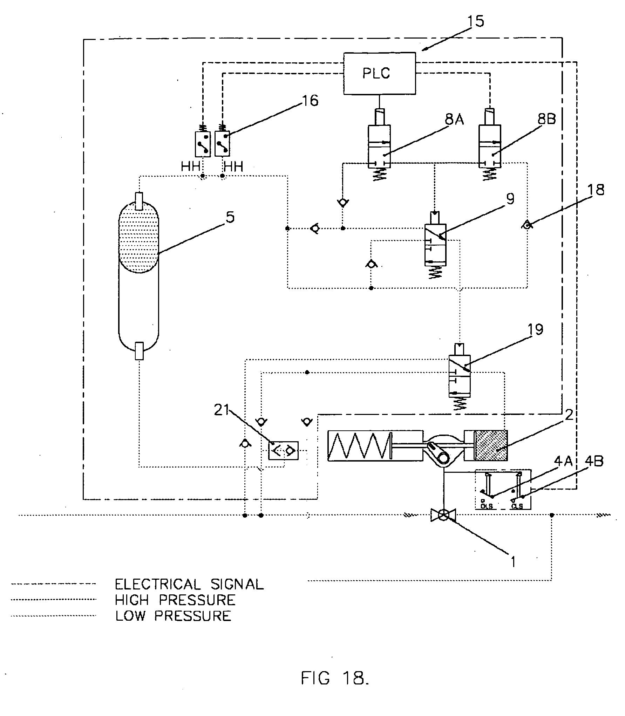

Referring now to Figure 18, there is illustrated a bi-directional autonomous shut-off valve system, i.e. the pump may be located to either side of the valve 1 and hence the restart pressure may arise on either side of the said valve. The system of Figure 18 is similar to the system illustrated in Figure 11. In the system of Figure 18 there is a pressure tapping into the pipeline on each side of the valve 1. A fluid connection is made from the tapping in the pipeline to a fluid line connected to a pressure tapping upstream of the valve 1. A non-return valve located in the said line allows fluid to pass when the pressure in the pipeline to the right of the valve 1 is greater than the pressure in the pipeline to the left of the valve 1. Conversely, the non-return valve is closed when the pressure in the pipeline to the left of the valve 1 is greater than the pressure in the pipeline to the right of the valve 1. A three-way valve 21 allows process fluid to pass to the accumulator 5 irrespective of which side of the valve 1 the pressure is greatest on and furthermore only allows fluid to pass to the accumulator 5 from the side of the valve on which the pressure is greatest. In the embodiment of Figure 18, the pressure transmitters 16 are shown located on the gas side of the accumulator rather than on the process fluid side thereof (in fact the system can work with the transmitters located on either side of the accumulator; and equally this can also be the case in any of the uni-directional systems illustrated in the preceding figures).

The sequence of operation of the system illustrated in Figure 18 is essentially the same as that for Figures 8 to 12 except that the restart pressure may arise from either side of the valve 1.

Each of the embodiments illustrated may be provided with a manual override facility allowing the autonomous power and control systems of the invention to be isolated and valve operations to be performed manually or by connection of external power sources, such as a portable diver operated gas/hydraulic power pack.

Each of the embodiments illustrated may be provided with an umbilical connection (or other method of remote connection, such as a telemetry unit). By connection of an umbilical or telemetry unit to the ASV controller, it is then possible to:
a) obtain feedback from the valve and pipeline, to the surface (in case of subsea system) or other location, and / or
b) remotely control the operation of the valve.

For (a), the feedback typically consists of signals that confirm the valve position and the local pipeline pressures at the ASV location. (By monitoring the pressures, the operator could identify any unexpected falls in pressure, e.g. in the event of a line break).

For (b), a remote control room is able to command the valve to open or close (i.e. initiating the open or close sequences of the control valves, regardless of whether the pipeline pressures conform to the associated trigger levels). Or to override the automatic operation such that the valve remains in a desired state. E.g. once the valve is opened, the control room can override the automatic operation of the valve, i.e. latching it in the open position and preventing inadvertent closure in the event of anticipated pressure reductions.

Alternatively, (especially in the event of intermittent communications between the control room and the ASV valve controller), the valve can be commanded to be latched in its current position for a defined period of time (typically longer than the maximum outage duration for the telemetry link with the control room). At the end of the period the ASV unlatches and returns to automatic operation, unless commanded otherwise. However, if a longer period is needed in the latched position, then the control room periodically renews the latching command - within the defined latching time periods.

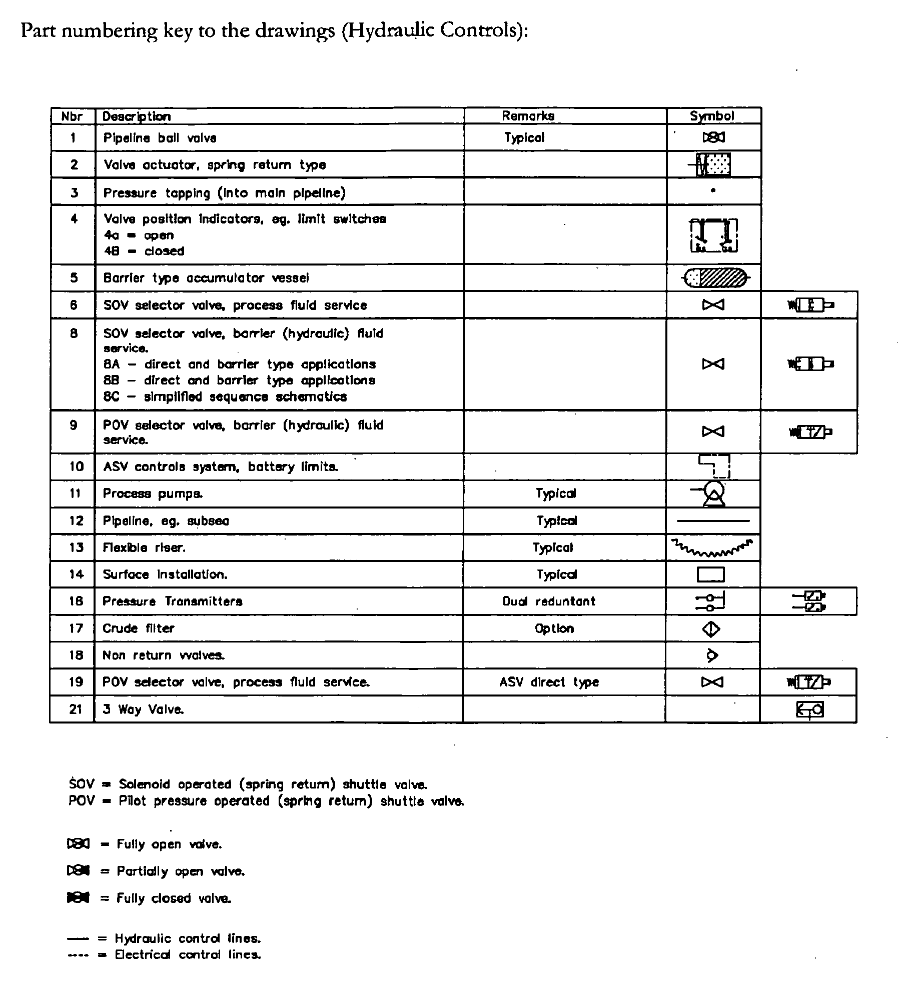

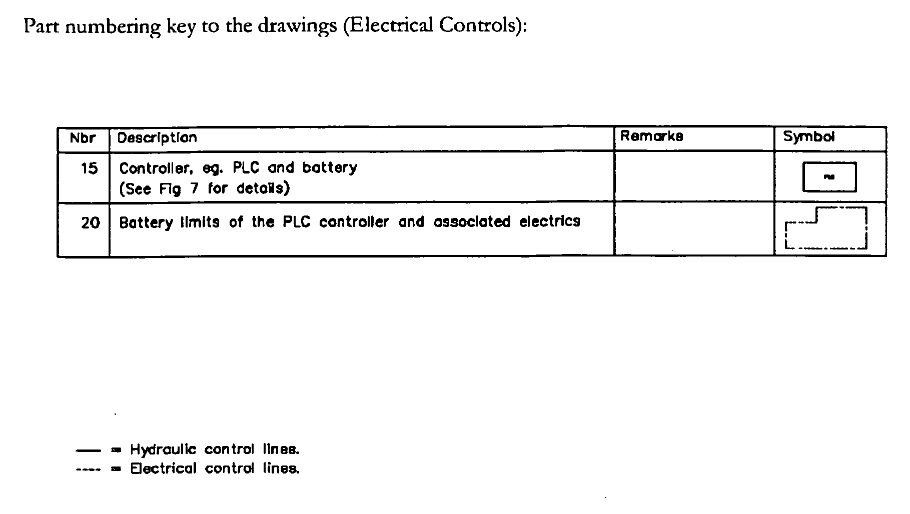

## Claims

1. Apparatus for controlling the flow of process fluid in a pipeline (12) including an autonomous shut-off valve system comprising:
i) a pipeline shut-off valve (1) including a fluid powered valve actuator (2) moveable between a closed and an open position by means of pressure generated by the process fluid;
ii) at least one pressure tapping (3) in the pipeline;
iii) a fluid connection to the pressure tapping arranged to deliver process fluid to power the valve actuator (2);
**characterised in that** it further comprises
iv at least one pressure sensor (16) arranged to sense pressure in the pipeline;
v) at least one control valve (6- 8c) having an open and a closed status operable to permit or prevent flow of pressurised fluid to the valve actuator (2); and
vi) a controller 15 arranged to open and close the control valve;
wherein the control valve is commanded to change status when a pressure threshold is reached, the pressure threshold being detected by the pressure sensor and the control valve being commanded to its new position by the controller (15).

2. Apparatus according to Claim 1, wherein the process fluid powers the valve actuator directly [or indirectly].

3. Apparatus according to Claim 1, wherein the process fluid powers the valve actuator indirectly.

4. Apparatus according to Claim 3, further comprising an accumulator, wherein the process fluid pressurises an upstream side of an accumulator and a downstream side of the accumulator pressurises the valve actuator.

5. Apparatus according to Claim 4, further comprising a second control valve.

6. Apparatus according to Claim 5, wherein the second control valve is located upstream or downstream of the accumulator.

7. Apparatus according to any preceding claim, wherein the at least one pressure tapping is located on either or both sides of the shut-off valve.

8. Apparatus according to any preceding claim, wherein the controller is programmed to hold at least one of the control valves in one of its closed and open states for a pre-set time period.

9. Apparatus according to any preceding claim, wherein the shut-off valve actuator includes a biasing means arranged to bias the shut-off valve into one of a closed condition and an open condition.

10. Apparatus according to any preceding claim, further comprising at least one pilot valve arranged to permit or prevent flow of process fluid from the pipeline to the valve actuator.

11. Apparatus according to Claim 10, further comprising a second pilot valve arranged to control the status of the first pilot valve.

12. Apparatus according to any of claims 4 to 10, when dependent on Claim 3, further comprising a solenoid operated valve located upstream of the accumulator and downstream of the pressure tapping

13. Apparatus according to Claim 12, further comprising a pilot valve arranged to permit or prevent flow of pressurised accumulator fluid to the valve actuator.

14. A method of controlling the flow of fluid in a pipeline for the transportation of a process fluid **characterised by** controlling the status of the autonomous shut-off valve system as claimed in any of Claims 1 to 12, comprising the steps of.
i) monitoring the pressure of the process fluid;
ii) when the pressure falls below a first threshold closing the pipeline shut-off valve to stop the flow of fluid downstream of the pipeline shut-off valve;
iii) re-starting the flow of fluid in the pipeline with the pipeline shut-off valve closed;
iv) upon sensing a high pressure threshold controlling the status of a control valve to permit the introduction of a pressurised fluid into the valve actuator to open said pipeline shut-off valve.

15. A method according to Claim 14, wherein the apparatus includes an accumulator in fluid connection with the pipeline upstream of the said pipeline shut-off valve, and the valve actuator, and means to isolate the accumulator from the pipeline, the method including the further step of isolating the accumulator from the pipeline for a period upon detection in the pipeline of one of: a rising pressure and a falling pressure.

16. A method according to Claim 15, wherein the period is defined as:
i) a fixed period of time; or
ii) by a threshold pressure in the pipeline, the said shut-off valve re-opening when the pipeline pressure stabilises above the threshold.

## Patentansprüche

1. Vorrichtung zum Regeln des Flusses von Prozessfluid in einer Pipeline (12), die ein autonomes Absperrventilsystem beinhaltet, die Folgendes umfasst:
i) ein Pipeline-Absperrventil (1) mit einem hydraulisch betriebenen Ventilstellglied (2), das mit vom Prozessfluid erzeugtem Druck zwischen einer geschlossenen und einer offenen Position beweglich ist;
ii) wenigstens eine Druckentnahme (3) in der Pipeline;
iii) eine Fluidverbindung mit der Druckentnahme, um Prozessfluid zum Betreiben des Ventilstellglieds (2) zuzuführen;
**dadurch gekennzeichnet, dass** sie ferner Folgendes umfasst:
iv) wenigstens einen Drucksensor (16) zum Erfassen von Druck in der Pipeline;
v) wenigstens ein Steuerventil (6, 8c) mit einem offenen und einem geschlossenen Zustand, das die Aufgabe hat, den Fluss von Druckfluid zu dem Ventilstellglied (2) zuzulassen oder zu verhindern; und
vi) eine Steuerung (15) zum Öffnen und Schließen des Steuerventils;
wobei das Steuerventil veranlasst wird, seinen Zustand zu wechseln, wenn ein Druckschwellenwert erreicht ist, wobei der Druckschwellenwert vom Drucksensor erfasst wird und wobei das Steuerventil von der Steuerung (15) veranlasst wird, seine neue Position anzufahren.

2. Vorrichtung nach Anspruch 1, wobei das Prozessfluid das Ventilstellglied direkt (oder indirekt) antreibt.

3. Vorrichtung nach Anspruch 1, wobei das Prozessfluid das Ventilstellglied indirekt antreibt.

4. Vorrichtung nach Anspruch 3, die ferner einen Druckspeicher umfasst, wobei das Prozessfluid eine stromaufwärtige Seite eines Druckspeichers unter Druck setzt und eine stromabwärtige Seite des Druckspeichers das Ventilstellglied unter Druck setzt.

5. Vorrichtung nach Anspruch 4, die ferner ein zweites Steuerventil umfasst.

6. Vorrichtung nach Anspruch 5, wobei sich das zweite Steuerventil stromaufwärts oder stromabwärts von dem Druckspeicher befindet.

7. Vorrichtung nach einem der vorherigen Ansprüche, wobei sich die wenigstens eine Druckentnahme auf einer oder auf beiden Seiten des Absperrventils befindet.

8. Vorrichtung nach einem der vorherigen Ansprüche, wobei die Steuerung so programmiert ist, dass sie wenigstens eines der Steuerventile für eine voreingestellte Zeitperiode in seinem geschlossenen bzw. offenen Zustand hält.

9. Vorrichtung nach einem der vorherigen Ansprüche, wobei das Absperrventilstellglied ein Vorspannmittel beinhaltet, das so gestaltet ist, dass es das Absperrventil in einen geschlossenen oder einen offenen Zustand vorspannt.

10. Vorrichtung nach einem der vorherigen Ansprüche, das ferner wenigstens ein Vorsteuerventil mit der Aufgabe umfasst, den Fluss von Prozessfluid von der Pipeline zum Ventilstellglied zuzulassen oder zu verhüten.

11. Vorrichtung nach Anspruch 10, die ferner ein zweites Vorsteuerventil mit der Aufgabe umfasst, den Zustand des ersten Vorsteuerventils zu steuern.

12. Vorrichtung nach einem der Ansprüche 4 bis 10 in Abhängigkeit von Anspruch 3, die ferner ein solenoidbetätigtes Ventil umfasst, das sich stromaufwärts von dem Druckspeicher und stromabwärts von der Druckentnahme befindet.

13. Vorrichtung nach Anspruch 12, die ferner ein Vorsteuerventil mit der Aufgabe umfasst, den Fluss von Druckspeicherdruckfluid zum Ventilstellglied zuzulassen oder zu verhindern.

14. Verfahren zum Regeln des Flusses von Fluid in einer Pipeline zum Transportieren eines Prozessfluids , **gekennzeichnet durch** Steuern des Zustands des autonomen Absperrventils nach einem der Ansprüche 1 bis 12, das die folgenden Schritte beinhaltet:
i) Überwachen des Drucks des Prozessfluids;
ii) Schließen, wenn der Druck unter einen ersten Schwellenwert abfällt, des Pipeline-Absperrventils, um den Fluss von Fluid stromabwärts von dem Pipeline-Absperrventil zu stoppen;
iii) Neustarten des Flusses von Fluid in der Pipeline mit geschlossenem Pipeline-Absperrventil;
iv) Steuern, nach dem Erfassen eines Hochdruckschwellenwertes, des Zustands eines Steuerventils, um das Einleiten eines Druckfluids in das Ventilstellglied zum Öffnen des genannten Pipeline-Absperrventils zuzulassen

15. Verfahren nach Anspruch 14, wobei die Vorrichtung einen Druckspeicher in Fluidverbindung mit der Pipeline stromaufwärts von dem genannten Pipeline-Absperrventil, und dem Ventilstellglied, und Mittel zum Isolieren des Druckspeichers von der Pipeline beinhaltet, wobei das Verfahren den weiteren Schritt des Isolierens des Druckspeichers von der Pipeline für eine Periode nach dem Erkennen eines Druckanstiegs oder eines Druckabfalls in der Pipeline beinhaltet.

16. Verfahren nach Anspruch 15, wobei die Periode definiert ist als:
i) eine feste Zeitperiode; oder
ii) durch einen Schwellendruck in der Pipeline, wobei das genannte Absperrventil wieder öffnet, wenn sich der Pipeline-Druck über dem Schwellenwert stabilisiert.

## Revendications

1. Appareil permettant de commander l'écoulement d'un fluide de traitement dans un pipeline (12) comprenant un système de soupape d'arrêt autonome comportant :
i) une soupape d'arrêt de pipeline (1) comprenant un actionneur de soupape hydraulique (2) pouvant se déplacer entre une position fermée et une position ouverte au moyen d'une pression générée par le fluide de traitement ;
ii) au moins une prise de pression (3) dans le pipeline ;
iii) une connexion fluidique au niveau de la prise de pression mise en oeuvre pour fournir un fluide de pression pour alimenter l'actionneur de soupape (2) ;
**caractérisé en ce qu'**il comporte par ailleurs
iv) au moins un capteur de pression (16) mis en oeuvre pour capter la pression dans le pipeline ;
v) au moins une soupape de commande (6, 8c) ayant un statut ouvert et un statut fermé servant à permettre ou empêcher l'écoulement du fluide sous pression jusque dans l'actionneur de soupape (2) ; et
vi) un organe de commande (15) mis en oeuvre pour ouvrir et fermer la soupape de commande ;
dans lequel la soupape de commande reçoit pour ordre de changer de statut quand un seuil de pression est atteint, le seuil de pression étant détecté par le capteur de pression et la soupape de commande recevant pour ordre de passer sur sa nouvelle position par l'organe de commande (15).

2. Appareil selon la revendication 1, dans lequel le fluide de traitement alimente l'actionneur de soupape directement.

3. Appareil selon la revendication 1, dans lequel le fluide de traitement alimente l'actionneur de soupape indirectement.

4. Appareil selon la revendication 3, comportant par ailleurs un accumulateur, dans lequel le fluide de traitement met sous pression un côté en amont d'un accumulateur et un côté en aval de l'accumulateur met sous pression l'actionneur de soupape.

5. Appareil selon la revendication 4, comportant par ailleurs une deuxième soupape de commande.

6. Appareil selon la revendication 5, dans lequel la deuxième soupape de commande est située en amont ou en aval de l'accumulateur.

7. Appareil selon l'une quelconque des revendications précédentes, dans lequel ladite au moins une prise de pression est située d'un ou des deux côtés de la soupape d'arrêt_{.}

8. Appareil selon l'une quelconque des revendications précédentes, dans lequel l'organe de commande est programmé pour maintenir au moins l'une des soupapes de commande dans l'un de son état fermé et de son état ouvert pendant une période de temps prédéterminée.

9. Appareil selon l'une quelconque des revendications précédentes, dans lequel l'actionneur de soupape d'arrêt comprend un moyen de sollicitation mis en oeuvre pour solliciter la soupape d'arrêt dans l'une d'une condition fermée et d'une condition ouverte.

10. Appareil selon l'une quelconque des revendications précédentes, comportant par ailleurs au moins une soupape pilote mise en oeuvre pour permettre ou empêcher l'écoulement du fluide de traitement depuis le pipeline jusque dans l'actionneur de soupape.

11. Appareil selon la revendication 10, comportant par ailleurs une deuxième soupape pilote mise en oeuvre pour commander le statut de la première soupape pilote.

12. Appareil selon l'une quelconque des revendications 4 à 10, quand dépendantes de la revendication 3, comportant par ailleurs une soupape à solénoïde située en amont de l'accumulateur et en aval de la prise de pression.

13. Appareil selon la revendication 12, comportant par ailleurs une soupape pilote mise en oeuvre pour permettre ou empêcher l'écoulement du fluide de l'accumulateur sous pression jusque dans l'actionneur de soupape.

14. Procédé permettant de commander l'écoulement d'un fluide dans un pipeline pour le transport d'un fluide de traitement **caractérisé par** la commande du statut du système de soupape d'arrêt autonome selon l'une quelconque des revendications 1 à 12, comportant les étapes consistant à :
i) surveiller la pression du fluide de traitement ;
ii) quand la pression tombe au-dessous d'un premier seuil, fermer la soupape d'arrêt de pipeline pour arrêter l'écoulement du fluide en aval de la soupape d'arrêt de pipeline ;
iii) redémarrer l'écoulement du fluide dans le pipeline, la soupape d'arrêt de pipeline étant fermée ;
iv) dès la détection d'un seuil de pression élevé, commander le statut d'une soupape de commande pour permettre l'introduction d'un fluide sous pression dans l'actionneur de soupape pour ouvrir ladite soupape d'arrêt de pipeline.

15. Procédé selon la revendication 14, dans lequel l'appareil comprend un accumulateur en connexion fluidique avec le pipeline en amont de ladite soupape d'arrêt de pipeline, et l'actionneur de soupape, et un moyen permettant d'isoler l'accumulateur du pipeline, le procédé comprenant l'étape consistant par ailleurs à isoler l'accumulateur du pipeline pendant une période dès la détection dans le pipeline de l'une parmi : une pression à la hausse et une pression à la baisse.

16. Procédé selon la revendication 15, dans lequel la période est définie comme étant :
i) une période de temps fixe ; ou
ii) par un seuil de pression dans le pipeline, ladite soupape d'arrêt s'ouvrant à nouveau quand la pression du pipeline se stabilise au-dessus du seuil.
